# EUROPEAN PATENT SPECIFICATION

(11) **EP 2 538 705 B1**
(45) Date of publication and mention of the grant of the patent: **27.03.2019**
(21) Application number: 10852746.6
(22) Date of filing: 21.09.2010
(51) Int. Cl.: H04W 4/24, H04L 12/14, H04M 15/00

(54) **LOAD CONTROL SUBSYSTEM, METHOD FOR REALIZING COMMUNICATION LOAD BALANCING AND SYSTEM THEREOF**
LASTSTEUERUNGSSUBSYSTEM, VERFAHREN FÜR KOMMUNIKATIONSLASTAUSGLEICH UND SYSTEM DAFÜR
SOUS-SYSTÈME DE CONTRÔLE DE CHARGE, PROCÉDÉ DESTINÉ À RÉALISER UN ÉQUILIBRAGE D'UNE CHARGE DE COMMUNICATION ET SYSTÈME CORRESPONDANT

(30) Priority: 09.06.2010 CN 201010195832
(43) Date of publication of application: 26.12.2012
(73) Proprietor: ZTE Corporation, Shenzhen, Guangdong 518057 (CN)
(72) Inventor: ZHANG, Shanfeng, Shenzhen Guangdong 518057 (CN); GENG, Kaipin, Shenzhen Guangdong 518057 (CN); WANG, Hui, Shenzhen Guangdong 518057 (CN)
(74) Representative: J A Kemp
(86) International application number: PCT/CN2010/077230
(87) International publication number: WO 2011/153754

(56) References cited:
- CN-A- 101 711 044
- CN-C- 1 172 470
- US-A1- 2002 183 039
- US-A1- 2006 040 641
- US-A1- 2006 142 018
- US-A1- 2006 142 018

## Description

### TECHNICAL FIELD OF THE INVENTION

The present disclosure relates to the field of mobile communications, and in particular to a method and a system for realizing communication load balance, and a load control subsystem.

### BACKGROUND OF THE INVENTION

With the continuous development of Intelligent Network technology, value added services which provide personalized services for users emerge endlessly, and the promotion of the value added services has become an important approach for operators to attract users.

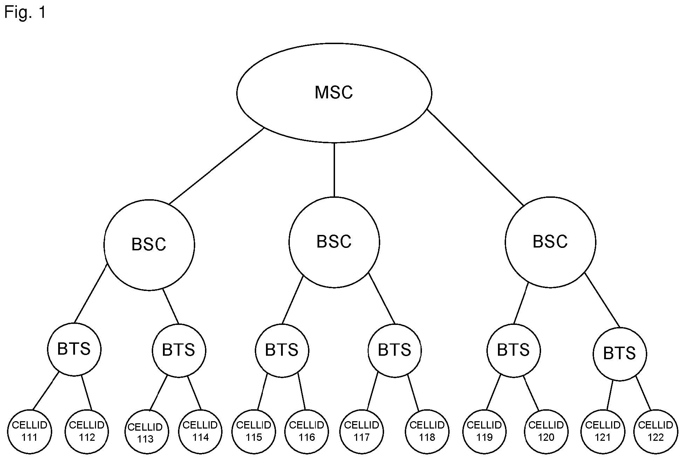

As shown in Fig. 1, in a current core network architecture, a Mobile Switching Center (MSC) manages a plurality of Base Station Controllers (BSC) in one district, while each BSC manages a plurality of Base Transceiver Stations (BTS). Currently, each BTS supports at most three cells (CELLID), the CELLID being physically the smallest management unit of a core network. Since the number of users in each CELLID is different and the frequency users use network resources in each CELLID are also different, communication loads of BTSs differ from one another greatly, for example, some BTSs run in a low load status all the time while some BTSs run in a high load status all the time. Due to such condition that BTS communication loads are not balanced, a low load BTS exists, which wastes device resources, while a fault may frequently occur in a high load BTS due to the continuous operation in a high intensity status, so that the network stability and the life-span of the device will be affected.

An existing method for realizing communication load balance is to allocate mobile stations reasonably according to the degree of communication between a mobile station and a BTS, so as to achieve the communication load balance of a core network. However, the method has limitations in an actual application. For a mobile network, the interaction between a mobile station and a BTS generally applies a principle of proximity, that is, the mobile station uses the nearest BTS. When some mobile stations are always used for communication in prosperous business quarters or residential quarters, the loads of these cells necessarily become high. Therefore, with the control method, the communication loads of BTSs can not be dynamically adjusted based on the current load status of the BTSs, and thus the communication load balance of the core network can not be achieved.

US20060142018 A1 discloses controlling traffic on a communications network, dynamic and flexible control plans that enable service providers to control or influence customer access to communications facilities. Communications facilities are monitored to identify network elements, such as cell sites, that are overloaded. When the traffic intensity on a particular facility exceeds a predetermined level, either active or passive control is imposed on subscribers that are in the geographic area of the facility. Active control involves blocking, delaying or disrupting subscriber calls during the critical time period. Passive control involves providing cost incentives or disincentives during low or peak periods of traffic intensity. Customers are notified of the commencement and/or termination of active or passive control preferably via SMS. When implemented with stationary cellular service, the systems and methods aid in traffic engineering and provide opportunities for customers to reduce the cost and increase the accessibility of telephone service.

According to US20060040641 A1, changes in user behavior of usage of wireless services from a mobile device are encouraged in order to effect shaping of traffic and utilization patterns among a plurality of cells within a rate plan region, wherein a discount indicator disposed in said mobile device is provided to notify a user of a discount available for consuming wireless service from a given cell. A geo-cost policy is established for that user or mobile device in which rules and conditions according to the available discounts and class of service are defined. A service completer queues services and automatically completes queued services upon present conditions meeting said geo-cost policy rules, such as delaying and later delivering messages when the mobile device is relocated to a cell where discounts are being offered.

### SUMMARY OF THE INVENTION

The main purpose of the disclosure is to provide a method and a system for achieving communication load balance, and a load control subsystem, so as to reasonably and effectively realizing communication load balance of a core network.

The features of the method and device according to the present disclosure are defined in the independent claims, and the preferable features according to the present invention are defined in the dependent claims.

The beneficial effects of the disclosure are as follows: by setting different charging solutions for different cells, the present disclosure guides a user to achieve value added services at low load cells, so as to effectively adjust communication loads of the cells and avoid excessive diversity between the communication loads of the cells, thereby facilitating to realize the communication load balance of a core network.

The present disclosure adds a load control service subsystem connected with a core network and a value added service subsystem, thus achieving control over the communication loads of cells, only involving small changes to an existing core network and a value added service system, and not only saving manpower and material resources, but also enabling more convenient and flexible use.

The present disclosure further dynamically adjusts charging solutions corresponding to cells by monitoring the communication loads of the cells, so as to adapt to changing of the communication loads; in addition, the adjusting manner is more reasonable and effective.

### BRIEF DESCRIPTION OF THE DRAWINGS

Fig. 1 shows a schematic diagram of an architecture of an existing core network;
Fig. 2 shows a flowchart of a method for realizing communication load balance according to one embodiment of the present disclosure;
Fig. 3 shows a flowchart of a method for setting charging solutions according to one embodiment of the present disclosure;
Fig. 4 shows another flowchart of the method for realizing communication load balance according to another embodiment of the present disclosure;
Fig. 5 shows a structural diagram of a system for realizing communication load balance according to one embodiment of the present disclosure; and
Fig. 6 shows a schematic diagram of an architecture of the system according to the embodiment of Fig. 5.

### DETAILED DESCRIPTION

The disclosure will be further described in detail with reference to the drawings and specific embodiments hereinafter.

In the present disclosure, different charging solutions are set for different cells, and value added services triggered in cells by users are controlled according to the different charging solutions, so that communication load balance of each cell is realized.

### Embodiment 1:

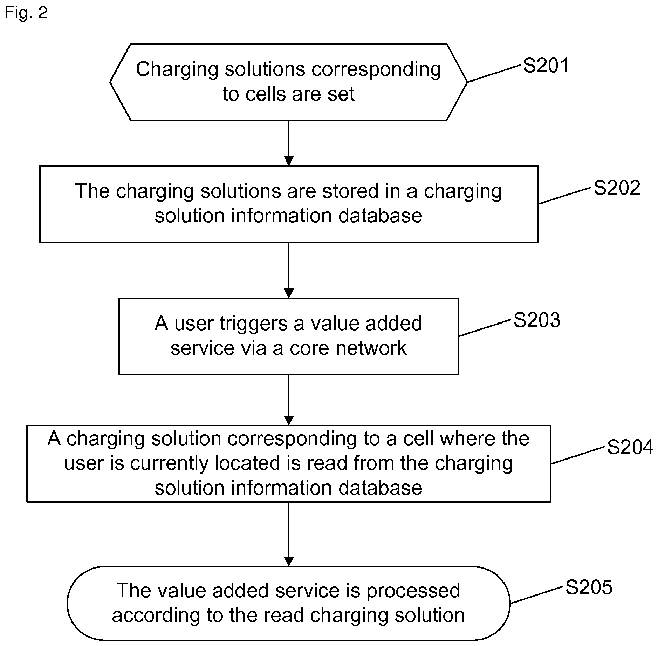

Referring to Fig. 2, a method for realizing communication load balance in the present embodiment includes the following steps.

Step S201: charging solutions corresponding to cells are set, and different cells managed by the same BTS may correspond to different charging solutions.

A charging solution may be set as a determined value, or a calculation coefficient based on a basis charge, i.e., a charge discount. Preferably, the charging solutions are charge discounts of basis charges of various value added services in each cell. For example, a charge discount corresponding to cell A is set to 80% while a charge discount corresponding to cell B is set to 50%, then it indicates that the call charge is 80% of the basis charge when a user makes a phone call in the cell A and the call charge is 50% of the basis charge when the user makes a phone call in the cell B. In order to attract users to communicate in low load cells as much as possible and alleviate communication pressures of high load cells, it is generally set as: the lower the communication load of a cell is, the lower the charge discount corresponding to the cell is, while the higher the communication load of a cell is, the higher the charge discount corresponding to the cell is.

The value added services have different types, such as a call service, a short message service, a multimedia message service, a wireless network service, or the like. Correspondingly, charging solutions may be set based on different service types.

The charging solutions may be set flexibly according to specific need, for example, the charging solutions may be set directly via a human-computer interface, or a preferable setting method is to set charging solutions corresponding to cells with a reasonable algorithm by monitoring the communication loads of the cells in a BTS in real time or periodically and with reference to the current and history load information of the cells. The charging solutions may be changed continuously according to the monitoring results, so as to dynamically adjust the charging solutions corresponding to the cells.

Step S202: the charging solutions are stored in a charging solution information database, so as to facilitate a user to call a corresponding charging solution during the communication process; and the user may further query the charging solutions of the cells.

Users of an Intelligent Network may have already subscribed one or more value added services, if a charging solution information database is arranged in a value added service subsystem used for bearing a value added service, then the subscribed value added service subsystem has to be modified; in one aspect, it will result in system instability, in another aspect, since each operator may use devices from multiple device manufacturers, operators have to spend a lot of manpower and material resources to update software of all the devices, it will consequently make great changes to the original value added service system and involves a high cost. Preferably, the present embodiment adds a load control subsystem used for bearing a load control service which is coupled to a core network and a value added service subsystem, and arranges a charging solution information database in the load control subsystem.

Step S203: a user triggers a certain value added service via a core network.

Step 204: a charging solution corresponding to a cell where the user is currently located is read from the charging solution information database; when the charging solution information database is arranged in the load control subsystem, the MSC in the core network triggers a load control service firstly, and after the load control subsystem reads the charging solution corresponding to the cell where the user is currently located from the charging solution information database, the load control subsystem forwards a charge control signaling containing the charging solution to the value added service subsystem; according to the specific requirement, the charge control signaling may further contain a calling number of the user, a called number of the user, user location information, user home information, or the like; and the value added service subsystem parses the charge control signaling, determines whether to run the value added service according to information included in the charge control signaling, and stores the charging solution which is taken as a charging basis of the value added service.

And Step S205: the value added service is processed according to the read charging solution.

For example, after receiving the forwarded charge control signaling, the value added service subsystem determines how to charge a user who pays post according to the charging solution and other information, or determines whether a value added service is allowed to run for a user who pays in advance in most cases; if the value added service is allowed to run, the value added service subsystem notifies the load control subsystem to run the value added service via the core network; otherwise, notifies the load control subsystem to release the value added service via the core network.

### Embodiment 2

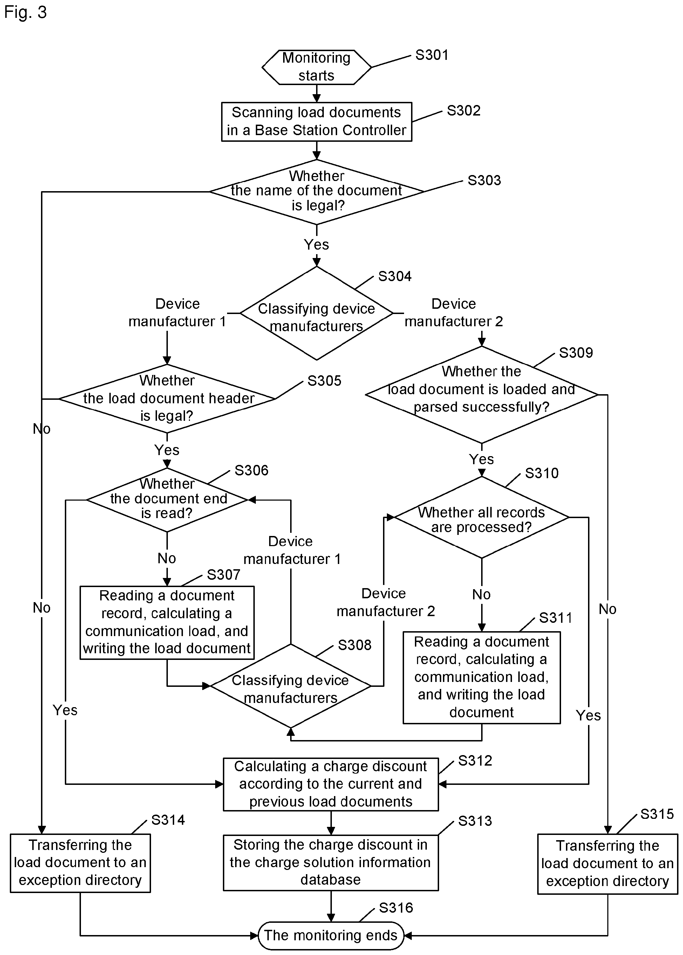

As shown in Fig. 3, a method for setting charging solutions by monitoring communication loads of cells in a BTS realized in the present embodiment includes the following steps:
Step S301: monitoring starts;
Step S302: each BSC makes statistics on communication loads of cells in each BTS, and load documents recording the communication loads are generated at the BSC; in this step, the load documents corresponding to the cells recorded by each BSC may be scanned in a regular time or in real time according to specific need;
Step S303: when a load document is found through scanning, firstly it is determined whether the name of the document is legal; if the document name is legal, Step S304 is executed; otherwise, Step S314 is executed;
Step S304: the formats of load documents provided by different device manufacturers may be different, thus their process manners are accordingly different and the load documents need to be processed by classification;
for example: for device manufacturer 1, Step S305 is then executed for processing, while for device manufacturer 2, Step S309 is then executed for processing;
Step S305: with respect to the load document of the device manufacturer 1, firstly whether the document head of the load document is legal is analyzed; if it is legal, Step S306 is executed; otherwise, Step S314 is executed;
Step S306: it is determined whether the end of the load document is read, if the document end is read, Step S313 is executed; otherwise, Step S307 is executed;
Step S307: when the end of the load document is not read, a next document record is read, the load document is written by calculating the current communication load, then Step S308 is executed, and a document record is waited to be read subsequently, until the document is read completely.
Step S308: a next document record is read, and processing is performed again by classification for different device manufacturers;
for example: for the device manufacturer 1, Step S306 is returned to for processing, while for the device manufacturer 2, Step S310 is returned to for processing;
Step S309: with respect to the load document of the device manufacturer 2, firstly it is determined whether the load document is loaded and parsed successfully; if it is successful, Step S310 is executed; otherwise, Step S315 is executed;
Step S310: it is determined whether all the document records are processed completely, if all the document records are processed, Step S312 is executed; otherwise, Step S311 is executed;
Step S311: a next document record is read, and the load document is written by calculating the current communication load, Step S308 is executed, and a document record is waited to be read subsequently, until the document is read completely;
Step S312: a charge discount corresponding to a cell is calculated according to the current load documents of the cells, wherein a load document in the previous period of time may be referred;
here, in a reasonable calculating method, a basis value of a communication load is set, and the charging solution corresponding to the cell is obtained by comparing the basis value with the communication load of the cell at present and/or that in previous period of time. For example, providing that the communication load of cell A is 0.8 times the basis value and the communication load of cell B is 0.5 times the basis value, then the charge discount corresponding to the cell A may be set as 80% and the charge discount corresponding to the cell B may be set as 50%;
Step S313: the obtained charge discount is stored in a charging solution information database, so as to facilitate the user to call a corresponding charging solution during the communication process, and then Step S316 is executed;
wherein the charging solution in the charging solution information database can be updated dynamically according to the monitored condition;
Step 314: an illegal load document is transferred to an exception directory, and then Step S316 is executed;
Step 315: an illegal load document is transferred to an exception directory, and then Step S316 is executed; and
Step S316: the monitoring ends.

### Embodiment 3:

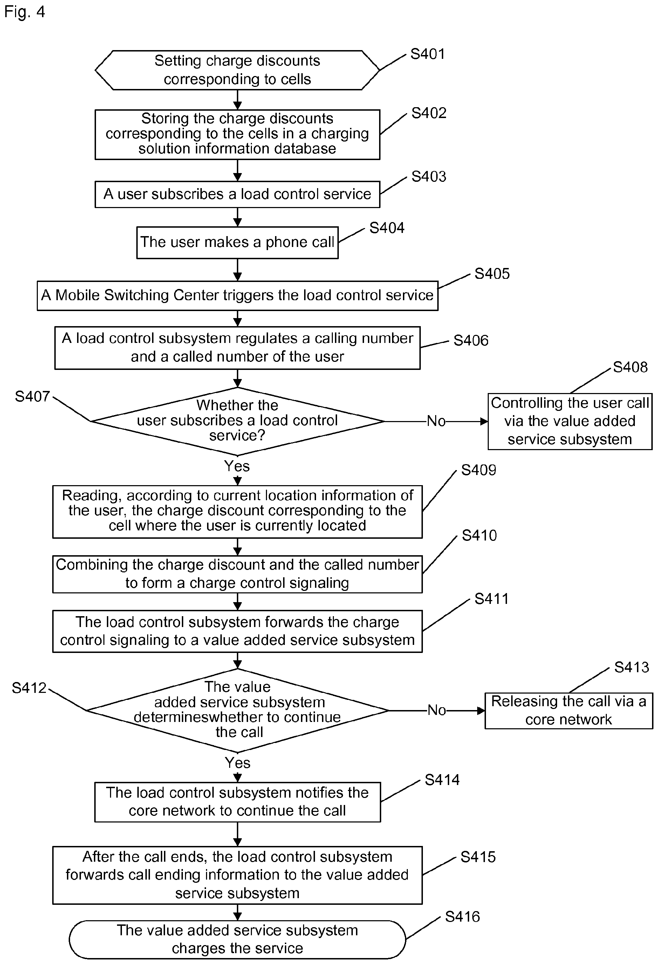

As shown in Fig. 4, the present embodiment achieves a control process of communication load balance by taking a call service as an example, and other value added services such as short messaging, multimedia messaging, wireless Internet access or the like are substantially the same as the process of the present embodiment. The value added service subsystem in the present embodiment bears a call service, and specifically includes the following steps:
Step S401: charge discounts corresponding to cells is set;
Step S402: the set charge discounts corresponding to the cells are stored in a charging solution information database provided by a load control subsystem;
Step S403: a user subscribes a load control service;
this step provides a subscribing platform for a user, and the user may subscribe a load control service by Interactive Voice Response (IVR), Unstructured Supplementary Service Data (USSD) or the like. Of course, the user may cancel the load control service at any moment by the above two manners according to the requirement;
Step S404: the user makes a phone call in a certain cell;
Step S405: the call accesses a core network, firstly triggers the load control service via an MSC, and forwards a calling number and a called number of the user and location information of the user to the load control subsystem;
Step S406: the load control subsystem regulates the formats of the calling number and the called number of the user;
Step S407: it is determined whether the user has already subscribed the load control service, if the user is determined to have subscribed the load control service, Step S409 is then executed; otherwise, Step S408 is then executed;
Step S408: the load control subsystem transfers to connect a value added service subsystem, and achieves a user call or other value added service through the core network by adopting a same manner as that in the related art;
for example, when determining that the user satisfies a call requirement, the value added service subsystem implements normal charging according to a calling duration, home location information of the user, or the like;
Step S409: the load control subsystem reads, according to current location information of the user, the charge discount corresponding to the cell where the user is located from the charging solution information database;
Step S410: there is a need to forward charge a control signaling containing the charge discount to the value added service subsystem, and in the embodiment, the charge control signaling is formed by placing the charge discount as a prefix before the called number of the user;
Step S411: the load control subsystem forwards the charge control signaling to the value added service subsystem;
Step S412: the value added service subsystem parses the charge control signaling to obtain the charge discount and other information, stores the charge discount, and determines whether to continue calling based on these information; if it is determined to continue calling, Step 414 is executed; otherwise, Step S413 is executed;
here, the determination process should further concern factors such as a current service provisioning status, a charge balance, a calling attribute or the like;
Step S413: the value added service subsystem notifies the load control subsystem to release the call via the core network, then the value added service cannot run continuously, and the current processing process is ended;
Step S414: the value added service subsystem notifies the load control subsystem to keep on the call via the core network, and the value added service can run normally;
for such value added services as a short message service, a multimedia message service or the like, the core network may further include a short message center or a multimedia message center which is used for interacting with an MSC; when the value added service subsystem notifies the load control subsystem to run the value added service via the core network, the core network controls the transmitting and receiving of short messages or multimedia messages via the short message center or the multimedia message center by adopting the related art. For such value added services as wireless Internet access or the like, when the value added service subsystem notifies the load control subsystem to run the value added service via the core network, the core network achieves a General Packet Radio Service (GPRS) Internet access function by adopting the related art;
Step S415: after the call is terminated, the load control subsystem then forwards service terminating information containing a calling duration or a termination time or the like to the value added service subsystem; and
Step S416: the value added service subsystem charges the present call of the user according to service terminating information and the charge discount.

### Embodiment 4:

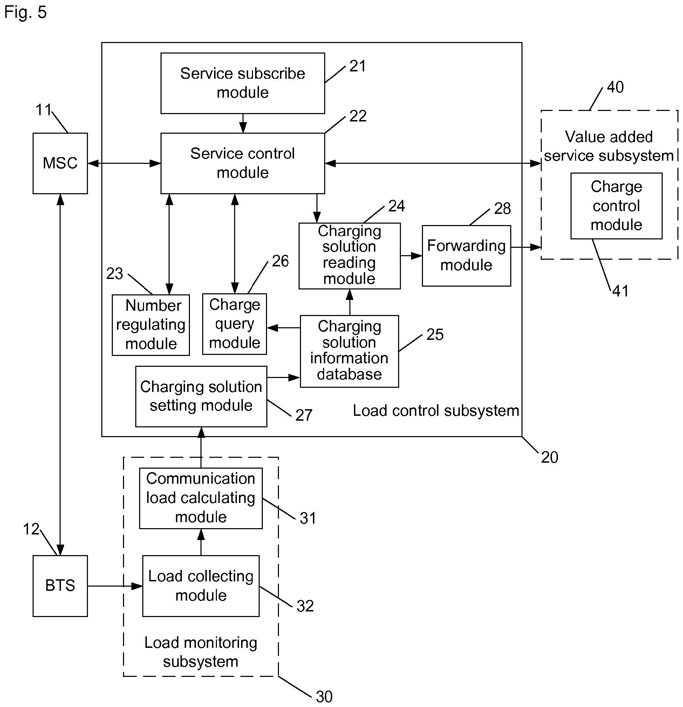

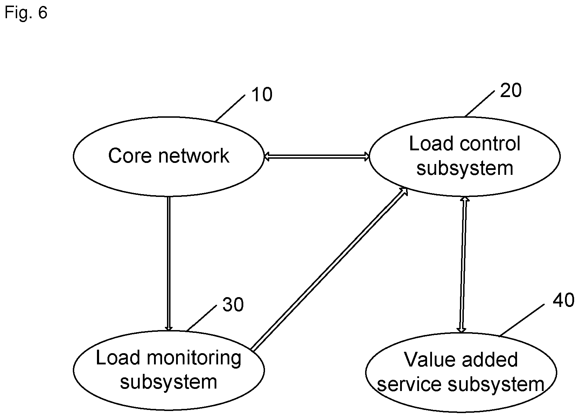

As shown in Figs. 5 and 6, the present disclosure further provides a load control subsystem and a system for realizing communication load balance, wherein the load control subsystem 20 is configured to bear a load control service and includes a charging solution setting module 27, a charging solution reading module 24 and a service control module 22; wherein the charging solution setting module 27 is configured to set charging solutions corresponding to cells; the charging solution reading module 24 is configured to, when a user triggers a value added service via a core network, read a charging solution corresponding to a cell where the user is currently located; and the service control module 22 is configured to process the value added service according to the read charging solution.

Further, the load control subsystem 20 may include: a charging solution information database 25, configured to store the charging solutions set by the charging solution setting module 27; and a forwarding module 28, configured to forward a charge control signaling containing the charging solution to a value added service subsystem 40 configured to bear a value added service; and
the service control module 22 is further configured to, when the value added service subsystem 40 determines according to the charge signalling that the value added service is allowed to run, run the value added service via the core network 10; otherwise, release the value added service via the core network 10.

Further, the charging solution setting module 25 is connected with a load monitoring subsystem 30 and is configured to acquire the charging solutions corresponding to the cells that the load monitoring subsystem 30 obtains by calculation through monitoring the communication loads of the cells.

Further, the load control subsystem 20 may include: a service subscribe module 21, a number regulating module 23 and a charge query module 26; wherein, the service subscribe module 21 is configured to subscribe or cancel a load control service, and a user may subscribe or cancel the load control service by Interactive Voice Response (IVR), Unstructured Supplementary Service Data (USSD) or the like;
the number regulating module 23 is configured to regulate a calling number and a called number of the user forwarded by the service control module 22, and to return the regulated numbers to the service control module 22 to determine whether the user subscribes the load control service; and
the charge query module 26 is configured to query a corresponding charging solution from the charging solution information database 25 based on a query request from the user, and to forward the corresponding charging solution to the user for reference; wherein the query manner may be IVR, USSD or the like.

The system for realizing communication load balance includes: a core network 10 configured to realize value added service access, a value added service subsystem 40 configured to bear a value added service, a load control subsystem 20 configured to bear a load control service, a load monitoring subsystem 30, or the like.

Wherein the load control subsystem 20 includes a service subscribe module 21, a service control module 22, a number regulating module 23, a charging solution reading module 24, a charging solution information database 25, a charge query module 26, a charging solution setting module 27, a forwarding module 28 or the like.

Wherein the service subscribe module 21 is configured to subscribe and cancel a load control service, wherein a user may subscribe or cancel a load control service by IVR, the USSD or the like.

The charging solution setting module 27 is configured to set charging solutions corresponding to cells. For example, the user may set the charging solutions corresponding to the cells directly via a human-computer interface, or set the charging solutions corresponding to the cells with a reasonable algorithm by using the load monitoring subsystem 30 to monitor the communication loads of the cells in a BTS in real time or in a regular time.

The charging solution information database 25 is configured to store the charging solutions corresponding to the cells set by the charging solution setting module 27.

The charge query module 26 is configured to query a corresponding charging solution from the charging solution information database 25 based on a query request from the user, and to forward the corresponding charging solution to the user for reference; wherein the query manner may be IVR, USSD, or the like.

The charging solution reading module 24 is configured to, when a user triggers a value added service via the core network 10, read a charging solution corresponding to a cell where the user is currently located from the charging solution information database 25.

The number regulating module 23 is configured to regulate a calling number and a called number of the user forwarded by the service control module 22, and to return the regulated numbers to the service control module 22 to determine whether the user subscribes the load control service.

The forwarding module 28 is configured to forward a charge control signaling containing the charging solution corresponding to the cell where the user is currently located and other information to the value added service subsystem 40. For example, in one embodiment, a called number of a user and a charging solution are combined to form a charge control signaling, and the charge control signaling is forwarded to the value added service subsystem 40.

The service control module 22 is configured to process the value added service according to the read charging solution. Specifically, the value added service subsystem 40 determines, according to the charge control signaling which contains the charging solution corresponding to the cell where the user is located and which is forwarded by the forwarding module 28, whether the value added service is allowed to run; if the value added service is allowed to run, then it notifies the service control module 22 to run the value added service via the core network 10; otherwise, it notifies the service control module 22 to release the value added service via the core network 10.

In the embodiment, the service control module 22 serves as an interface between the core network 10 and the load control subsystem 20, and may be further configured to control the triggering of a load control service; when the user triggers the value added service via the core network 10, an MSC 11 firstly triggers the load control service via the service control module 22, then the service control module 22 forwards the calling number and called number of the user to the number regulating module 23 to regulate the numbers, and determines whether the user subscribes the load control service; if determining that the user subscribes the load control service, the service control module 22 controls the charging solution reading module 24 to read the charging solution from the charging solution information database 25.

When the user subscribes or cancels the load control service and queries the charging solutions of the cells, all mobile terminals interact information with the service control module 22 via the MSC 11, and the load control module 22 is responsible for controlling the subscribing or cancelling of services and querying the charging solutions.

The load monitoring subsystem 30 is configured to monitor communication loads of the cells in a BTS 12, to calculate the charging solutions corresponding to the cells based on the communication loads of the cells, and to provide the calculated charging solutions to the charging solution setting module 27. For example, in a reasonable calculating method, a basis value of a communication load is set, and a charging solution corresponding to a cell is obtained by comparing the basis value with the communication load of the cell at present and/or that in a previous period of time. For example, the communication load of cell A is 0.8 times the basis value, and the communication load of cell B is 0.5 times the basis value, then the charge discount corresponding to the cell A may be set as 80%, and the charge discount corresponding to the cell B may be set as 50%.

The load monitoring subsystem 30 may specifically include a load collecting module 32 and a communication load calculating module 31; wherein the load collecting module 32 is configured to scan, periodically or in real time, load documents corresponding to the cells recorded by BSCs, and to provide the load documents to the communication load calculating module 31; and the communication load calculating module 31 calculates the charging solutions corresponding to the cells according to a preset calculating manner, and to provide the calculated charging solutions to the charging solution setting module 27.

Different value added service subsystem 40 may provide different types of value added services. Wherein the value added service subsystem 40 includes a charge control module 41 configured to receive a charge control signaling forwarded by the forwarding module 28, and to determine whether the value added service is allowed to run, according to the charging solution included in the charge control signaling and other information, in combination with factors such as a service provisioning state, a charge balance, a call attribute or the like; if the value added service is allowed to run, to notify the service control module 22 to run the value added service via the MSC 11 of the core network 10; otherwise, to notify the service control module 22 to release the value added service via the MSC 11 of the core network 10.

By setting different charging solutions for different cells and guiding a user to achieve value added services such as a call in a cell managed by a low load BTS, communication load imbalance of BTSs can be improved in the present disclosure, and problems such as a waste of device resources caused by a low load BTS, and a device fault and network instability which may probably be caused when a high load BTS has been in a high intensity status for a long time, can be avoided.

The present disclosure is not only applicable to a traditional intelligent network, but also applicable to an Online Charging System (OCS) intelligent network system. The present disclosure adds a load control service subsystem coupled with a core network and a value added service subsystem, so as to realize the control over the communication loads of the cells; additionally, since signaling transmission is adopted between the load control service subsystem and the value added service subsystem, the present disclosure makes smaller changes to an existing core network and the value added service system, thus not only saving manpower and material resources, but also enabling more convenient and flexible use.

The above are further detailed description of the present disclosure with reference to the specific embodiments, and the embodiments of the disclosure should not be construed as being limited to the detailed description. The invention is defined by the claims.

## Claims

1. A method for realizing communication load balance, comprising:
setting, by a load monitoring subsystem (30), a basis value of a communication load of a cell, in a Base Transceiver Station, BTS, monitoring communication loads of cells, in said BTS, and setting charging solutions corresponding to the cells (S201, S401), by obtaining a charging solution corresponding to the cell by comparing the basis value with the communication load of the cell at present and/or that in previous period of time, wherein the charging solutions are charge discounts of basis charges of various value added services in each cell;
acquiring, by a load control subsystem (20), the charging solutions corresponding to the cells that the load monitoring subsystem (30) obtains by calculation through monitoring the communication loads of the cells, and storing the charging solutions in a charging solution information database (25) (S202, S402), the load control subsystem (20) being connected with the load monitoring subsystem (30), the charging solution information database (25) being arranged in the load control subsystem (20), the load control subsystem (20) bearing a load control service, the load control subsystem (20) being coupled to a core network (10) and a value added service subsystem (40);
when a user triggers a value added service via the core network (10) (S203, S404), triggering, by a Mobile Switching Center, MSC (11), in the core network (10), the load control service (S405);
reading, by the load control subsystem (20) from the charging solution information database (25), a charging solution corresponding to a cell where the user is currently located (S204, S409), and forwarding a charge control signaling containing the charging solution to the value added service subsystem (40) for bearing the value added service; and
receiving, by the value added service subsystem (40), the charge control signaling forwarded by the load control subsystem (20), and processing the value added service according to the charging solution (S205) received, by: determining whether the value added service is allowed to run (S412), according to the charging solution included in the charge control signaling, in combination with at least one of a service provisioning state, a charge balance, or a call attribute; if the value added service is allowed to run, notifying a service control module (22) in the load control subsystem (20) to run the value added service via the MSC (11) of the core network (10) (S414); if the value added service is not allowed to run, notifying a service control module (22) in the load control subsystem (20) to release the value added service via the MSC (11) of the core network (10) (S413).

2. The method according to claim 1, wherein the charge control signaling is formed by combining the charging solution and a called number of the user (S410).

3. The method according to claim 1, further comprising: after running of the value added service ends, forwarding, by the load control subsystem (20), service ending information to the value added service subsystem (40) (S415).

4. The method according to claim 1, further comprising: after the MSC (11) triggers the load control service, determining, by the load control subsystem (20), whether the user subscribes the load control service (S407); if determining the user subscribes the load control service, reading, from the charging solution information database (25), the charging solution corresponding to the cell where the user is currently located.

5. A load control subsystem (20) for bearing a load control service, the load control subsystem (20) being configured to be coupled to a core network (10) and to a value added service subsystem (40) for bearing a value added service, the load control subsystem (20) comprising a charging solution setting module (27), a charging solution information database (25), a charging solution reading module (24), a forwarding module (28), and a service control module (22),
wherein the charging solution setting module (27) is configured to be connected with a load monitoring subsystem (30) and is configured to: acquire, from the load monitoring subsystem, charging solutions corresponding to cells, in a Base Transceiver Station, BTS,
wherein the charging solution information database (25) is configured to: store the charging solutions,
wherein the charging solution reading module (24) is configured to, when a user triggers the value added service via the core network (10) and a Mobile Switching Center, MSC (11), in the core network (10) triggers the load control service via the service control module (22), read, from the charging solution information database (25), a charging solution corresponding to a cell where the user is currently located,
wherein the forwarding module (28) is configured to forward a charge control signaling containing the charging solution to the value added service subsystem (40),
wherein the service control module (22) is configured to to run or release the value added service via the core network (10) as notified by the value added service subsystem (40);
if the value added service is allowed to run, the service control module (22) is notified to run the value added service via the MSC (11) of the core network (10); if the value added service is not allowed to run, the service control module (22) is notified to release the value added service via the MSC (11) of the core network (10).

6. A system for realizing communication load balance, comprising: the load control subsystem (20) according to claim 5; and the value added service subsystem (40).

## Patentansprüche

1. Verfahren zum Durchführen von Kommunikationslastverteilung, umfassend:
Festlegen, mittels eines Lastüberwachungssubsystems (30), eines Basiswertes einer Kommunikationslast einer Zelle, in einer Basis-Sendeempfängerstation (BTS),
Überwachen von Kommunikationslasten von Zellen in der besagten BTS,
und Festlegen von Belastungslösungen, die den Zellen (S201, S401) entsprechen, durch Erlangen einer Belastungslösung, die der Zelle entspricht, indem der Basiswert mit der momentanen und/oder während einer vorherigen Zeitspanne herrschenden Kommunikationslast der Zelle verglichen wird, wobei die Belastungslösungen Belastungsabzüge von Basisbelastungen von mehreren Mehrwertdiensten in jeder Zelle sind;
Erfassen, mittels eines Laststeuerungssubsystems (20), der Belastungslösungen, die den Zellen entsprechen, die das Lastüberwachungssubsystem (30) mittels Berechnung durch Überwachen der Kommunikationslasten der Zelle erlangt, und Speichern der Belastungslösungen in einer Belastungslösungsinformationsdatenbank (25) (S202, S402), wobei das Laststeuerungssubsystem (20) mit dem Lastüberwachungssubsystem (30) verbunden ist, die Belastungslösungsinformationsdatenbank (25) in dem Laststeuerungssubsystem (20) angeordnet ist, das Laststeuerungssubsystem (20) einen Laststeuerungsdienst trägt, das Laststeuerungssubsystem (20) mit einem Kernnetz (10) und einem Mehrwertdienstsubsystem (40) gekoppelt ist;
wenn ein Benutzer einen Mehrwertdienst über das Kernnetz (10) auslöst (S203, S404), Auslösen des Laststeuerungsdienstes (S405) in dem Kernnetz (10) mittels einer Vermittlungsstelle in Mobilfunknetzen, MSC (11);
Lesen, durch das Laststeuerungssubsystem (20) der Belastungslösungsinformationsdatenbank (25), einer Belastungslösung, die einer Zelle entspricht, in der sich der Benutzer zurzeit befindet (S204, S409), und Übermitteln eines Laststeuerungssignals, welches die Belastungslösung enthält, an das Mehrwertdienstsubsystem (40), um den Mehrwertdienst zu tragen; und
Empfangen, durch das Mehrwertdienstsubsystem (40), des vom Laststeuerungssubsystem (20) übermittelten Laststeuerungssignals, und Verarbeiten des Mehrwertdienstes gemäß der erhaltenen Belastungslösung (S205), durch Folgendes: Bestimmen, ob der Mehrwertdienst zum Betrieb zugelassen ist (S412), gemäß der im Laststeuerungssignal enthaltenen Belastungslösung, in Kombination mit mindestens einem von einem Dienstbereitstellungsstatus, einer Belastungsverteilung, oder einem Anrufattribut; wenn der Mehrwertdienst zum Betrieb zugelassen ist, Benachrichtigen eines Dienststeuerungsmoduls (22) in dem Laststeuerungssubsystem (20), um den Mehrwertdienst über die MSC (11) des Kernnetzes (10) zu betreiben (S414); wenn der Mehrwertdienst zum Betrieb nicht zugelassen ist, Benachrichtigen eines Dienststeuerungsmoduls (22) in dem Laststeuerungssubsystem (20), um den Mehrwertdienst über die MSC (11) des Kernnetzes (10) freizugeben (S413).

2. Verfahren nach Anspruch 1, wobei das Laststeuerungssignal durch Kombinieren der Belastungslösung und einer angerufenen Nummer des Benutzers gebildet wird (S410).

3. Verfahren nach Anspruch 1, ferner umfassend: nachdem ein Betrieb des Mehrwertdienstes beendet ist, Übermitteln, durch das Laststeuerungssubsystem (20), von Dienstendinformationen an das Mehrwertdienstsubsystem (40) (S415).

4. Verfahren nach Anspruch 1, ferner umfassend: nachdem die MSC (11) den Laststeuerungsdienst ausgelöst hat, Bestimmen, durch das Laststeuerungssubsystem (20), ob der Benutzer den Laststeuerungsdienst subskribiert hat (S407); wenn bestimmt wird, dass der Benutzer den Laststeuerungsdienst subskribiert hat, Lesen, aus der Belastungslösungsinformationsdatenbank (25), der Belastungslösung, die der Zelle entspricht, in der sich der Benutzer zurzeit befindet.

5. Laststeuerungssubsystem (20) zum Tragen eines Laststeuerungsdienstes, wobei das Laststeuerungssubsystem (20) konfiguriert ist, um mit einem Kernnetz (10) und einem Mehrwertdienstsubsystem (40) gekoppelt zu werden, um einen Mehrwertdienst zu tragen, wobei das Laststeuerungssubsystem (20) ein Belastungslösungseinstellungsmodul (27), eine Belastungslösungsinformationsdatenbank (25), ein Belastungslösungslesemodul (24), ein Übermittlungsmodul (28) und ein Dienststeuerungsmodul (22) umfasst,
wobei das Belastungslösungseinstellungsmodul (27) konfiguriert ist, um mit einem Lastüberwachungssubsystem (30) verbunden zu sein und für folgendes konfiguriert ist: Erfassen, von dem Lastüberwachungssubsystem, von Belastungslösungen, die den Zellen entsprechen, in einer Basis-Sendeempfängerstation (BTS),
wobei die Belastungslösungsinformationsdatenbank (25) für folgendes konfiguriert ist: Speichern der Belastungslösungen,
wobei das Belastungslösungslesemodul (24) konfiguriert ist, um, wenn ein Benutzer den Mehrwertdienst über das Kernnetz (10) und eine Vermittlungsstelle in Mobilfunknetzen, MSC (11) auslöst, in dem Kernnetz (10) den Laststeuerungsdienst über das Dienststeuerungsmodul (22) auslöst, Lesen, aus der Belastungslösungsinformationsdatenbank (25), einer Belastungslösung, die einer Zelle entspricht, in der sich der Benutzer zurzeit befindet,
wobei das Übermittlungsmodul (28) konfiguriert ist, um ein Laststeuerungssignal, welches die Belastungslösung enthält, an das Mehrwertdienstsubsystem (40) zu übermitteln,
wobei das Dienststeuerungsmodul (22) konfiguriert ist, um den Mehrwertdienst über das Kernnetz (10) zu betreiben oder freizugeben, wenn es vom Mehrwertdienstsubsystem (40) benachrichtigt wird;
wenn der Mehrwertdienst zum Betrieb zugelassen ist, wird das Dienststeuerungsmodul (22) benachrichtigt, um den Mehrwertdienst über die MSC (11) des Kernnetzes (10) zu betreiben; wenn der Mehrwertdienst zum Betrieb nicht zugelassen ist, wird das Dienststeuerungsmodul (22) benachrichtigt, um den Mehrwertdienst über die MSC (11) des Kernnetzes (10) freizugeben.

6. System zum Durchführen von Kommunikationslastverteilung umfassend: das Laststeuerungssubsystem (20) nach Anspruch 5; und das Mehrwertdienstsubsystem (40).

## Revendications

1. Procédé d'équilibrage de charge de communication, comprenant :
la définition, par un sous-système de surveillance de charge (30), d'une valeur de base d'une charge de communication d'une cellule, dans une station émettrice-réceptrice de base (BTS), la surveillance de charges de communication de cellules, dans ledit BTS, et la définition de solutions de facturation correspondant aux cellules (S201, S401), par l'obtention d'une solution de facturation correspondant à la cellule par la comparaison de la valeur de base à la charge de communication de la cellule à présent et/ou à celle d'une période de temps précédente, les solutions de facturation étant des réductions de frais de redevances de base de divers services à valeur ajoutée dans chaque cellule ;
l'acquisition, par un sous-système de régulation de charge (20), des solutions de facturation correspondant aux cellules que le sous-système de surveillance de charge (30) obtient par le calcul par le biais de la surveillance des charges de communication des cellules, et le stockage des solutions de facturation dans une base de données d'informations de solution de facturation (25) (S202, S402), le sous-système de régulation de charge (20) étant connecté au sous-système de surveillance de charge (30), la base de données d'informations de solution de facturation (25) étant agencée dans le sous-système de régulation de charge (20), le sous-système de régulation de charge (20) supportant un service de régulation de charge, le sous-système de régulation de charge (20) étant couplé à un réseau central (10) et un sous-système de service à valeur ajoutée (40) ;
lorsqu'un utilisateur déclenche un service à valeur ajoutée par le biais du réseau central (10) (S203, S404), le déclenchement, par un centre de commutation mobile, MSC (11), dans le réseau central (10), du service de régulation de charge (S405) ;
la lecture, par le sous-système de régulation de charge (20) depuis la base de données d'informations de solution de facturation (25), d'une solution de facturation correspondant à une cellule où l'utilisateur est actuellement situé (S204, S409), et le transfert d'une signalisation de régulation de charge contenant la solution de facturation au sous-système de service à valeur ajoutée (40) permettant de supporter le service à valeur ajoutée ; et
la réception, par le sous-système de service à valeur ajoutée (40), de la signalisation de régulation de charge transférée par le sous-système de régulation de charge (20), et le traitement du service à valeur ajoutée en fonction de la solution de facturation (S205) reçue, par : la détermination de savoir si le service à valeur ajoutée est autorisé à être exécuté (S412), en fonction de la solution de facturation comprise dans la signalisation de régulation de redevance, en combinaison avec un état de prestation de service, un équilibre de redevance et/ou un attribut d'appel ; si le service à valeur ajoutée est autorisée à être exécuté, l'indication à un module de régulation de service (22) dans le sous-système de régulation de charge (20) d'exécuter le service à valeur ajoutée par le biais du MSC (11) du réseau central (10) (S414) ; si le service à valeur ajoutée n'est pas autorisé à être exécuté, l'indication à un module de régulation de service (22) dans le sous-système de régulation de charge (20) de libérer le service à valeur ajoutée par le biais du MSC (11) du réseau central (10) (S413).

2. Procédé selon la revendication 1, dans lequel la signalisation de régulation de redevance est formée par la combinaison de la solution de facturation et d'un numéro appelé de l'utilisateur (S410).

3. Procédé selon la revendication 1, comprenant en outre : après la fin de l'exécution du service à valeur ajoutée, le transfert, par le sous-système de régulation de charge (20), des informations d'arrêt de service au sous-système de service à valeur ajoutée (40) (S415).

4. Procédé selon la revendication 1, comprenant en outre : après que le MSC (11) a déclenché le service de régulation de charge, la détermination, par le sous-système de régulation de charge (20), de savoir si l'utilisateur souscrit au service de régulation de charge (S407) ; si la détermination de savoir si l'utilisateur souscrit au service de régulation de charge, la lecture, depuis la base de données d'informations de solution de facturation (25), de la solution de facturation correspondant à la cellule où l'utilisateur est actuellement situé.

5. Sous-système de régulation de charge (20) destiné à supporter un service de régulation de charge, le sous-système de régulation de charge (20) étant conçu pour être couplé à un réseau central (10) et à un sous-système de service à valeur ajoutée (40) destiné à supporter un service à valeur ajoutée, le sous-système de régulation de charge (20) comprenant un module de définition de solution de facturation (27), une base de données d'informations de solution de facturation (25), un module de lecture de solution de facturation (24), un module de transfert (28) et un module de régulation de service (22),
le module de définition de solution de facturation (27) étant conçu pour être connecté à un sous-système de surveillance de charge (30) et étant conçu pour : acquérir, depuis le sous-système de surveillance de charge, des solutions de facturation correspondant à des cellules, dans une station émettrice-réceptrice de base, BTS,
la base de données d'informations de solution de facturation (25) étant conçue pour : stocker les solutions de facturation,
le module de lecture de solution de facturation (24) étant conçu pour, lorsqu'un utilisateur déclenche le service à valeur ajoutée par le biais du réseau central (10) et d'un centre de commutation mobile, MSC (11), dans le réseau central (10) déclenche le service de régulation de charge par le biais du module de régulation de service (22), lire, depuis la base de données d'informations de solution de facturation (25), une solution de facturation correspondant à une cellule où l'utilisateur est actuellement situé,
le module de transfert (28) étant conçu pour transférer une signalisation de régulation de redevance contenant la solution de facturation au sous-système de service à valeur ajoutée (40),
le module de régulation de service (22) étant conçu pour exécuter ou libérer le service à valeur ajoutée par le biais du réseau central (10) comme indiqué par le sous-système de service à valeur ajoutée (40) ;
si le service à valeur ajoutée est autorisé à être exécuté, le module de régulation de service (22) reçoit l'indication d'exécuter le service à valeur ajoutée par le biais du MSC (11) du réseau central (10) ; si le service à valeur ajoutée n'est pas autorisé à être exécuté, le module de régulation de service (22) est notifié, reçoit l'indication de libérer le service à valeur ajoutée par le biais du MSC (11) du réseau central (10).

6. Système d'équilibrage de charge de communication, comprenant : le sous-système de régulation de charge (20) selon la revendication 5 et le sous-système de service à valeur ajoutée (40).
